# EUROPÄISCHE PATENTSCHRIFT

(11) **EP 0 445 376 B1**
(45) Veröffentlichungstag und Bekanntmachung des Hinweises auf die Patenterteilung: **19.04.1995**
(21) Anmeldenummer: 90122815.5
(22) Anmeldetag: 29.11.1990
(51) Int. Cl.: H01R 13/514, H04M 1/02

(54) **Steckverbinder**
Connector
Connecteur

(30) Priorität: 09.03.1990 GB 9005283
(43) Veröffentlichungstag der Anmeldung: 11.09.1991
(73) Patentinhaber: KRONE Aktiengesellschaft, D-14167 Berlin (DE)
(72) Erfinder: Pantland, Robert Michael, Gloucester, Glouchestershire (GB); Gow, Neil, Stroud, Glos G16 8AG (GB)

(56) Entgegenhaltungen:
- EP-A- 0 345 988
- AT-C- 372 219
- DE-A- 3 710 896
- GB-A- 2 013 423

## Beschreibung

Die Erfindung bezieht sich auf einen Steckverbinder zum Verbinden eines Steckers mit elektrisch isolierten Leitern nach dem Oberbegriff des Anspruches 1.

Er wird beispielsweise in der Telekommunikation eingesetzt, wenn ein Telefongerät über eine Schnur mit einem geeigneten Stecker mit einer Steckdose auf einer Wandtafel verbunden wird. Die Steckdose ist auf der entgegengesetzten Seite der Wandtafel mit der Telefonleitung verbunden.

Aus der EP-A-03 459 88 ist ein Steckverbinder zum Verbinden eines Steckers mit elektrischen isolierten Leitern bekannt. Der Steckverbinder weist einen Hohlraum auf, zur Aufnahme eines Steckers, an dem elektrische Leiter angeschlossen sind. Im Steckverbinder ist ein Rahmen mit Leiterbahnen vorgesehen, die derart verlängert sind, daß sie in den Hohlraum eingreifen, um dort mit dem Stecker eine elektrische Verbindung herzustellen. Ferner sind kammartige Leisten vorgesehen, die auf einer Platte aufgesteckt sind und im inneren Schneidklemm-Kontakte aufnehmen. Die Schneidklemm-Kontakte sind im unteren Bereich mit Steckkontakten versehen. An verjüngten Stellen der Leiterbahnen werden diese Steckkontakte aufgesteckt, so daß die Schneidklemm-Kontakte mit den Leiterbahnen verbunden sind. Nachteilig bei diesem Steckverbinder ist, daß die Verbindung zwischen den Steckkontakten und der Leiterplatte nur eine punktförmige Verbindung herstellt und daß die Fixierung und Anordnung der Schneidklemm-Kontakte und der Leiterbahnen zueinander instabil ist. Die Herstellung des Rahmens für die Leiterbahnen ist sehr aufwendig und kostspielig. Ferner werden für die Aufnahme der Schneidklemm-Kontakte zwei Leisten benötigt.

Der Erfindung liegt von daher die Aufgabe zugrunde, einen Steckverbinder der gattungsgemäßen Art zu schaffen, der eine einwandfreie großflächige Kontaktierung zwischen den beiden Sätzen von Verbindungselementen gewährleistet, wobei ein Verschieben der zu kontaktierenden Verbindungselemente zweier Sätze vermieden werden soll.

Die Lösung der Aufgabe ergibt sich aus den kennzeichnenden Merkmalen des Anspruches 1. Der Vorteil der Anordnung ist, daß beide Sätze von Verbindungselementen an ihren Enden großflächige Kontaktzungen bzw. Fußabschnitte aufweisen, so daß die elektrische Verbindung der Verbindungselemente vom ersten Satz auf den zweiten Satz einwandfrei gewährleistet ist. Darüber hinaus sind die Verbindungselemente des ersten und zweiten Satzes einwandfrei geführt, so daß auch mechanische Belastungen kein Verschieben der Verbindungselemente zueinander und somit ein Auftrennen der elektrischen Verbindung erwirken können.

Gemäß einem Aspekt der vorliegenden Erfindung ist ein Steckverbinder zum Verbinden eines Steckers mit elektrisch isolierten Leitern vorgesehen, wobei der Steckverbinder ein spritzgegossenes Gehäuse mit einem Hohlraum oder einer Kammer zur Aufnahme des Steckers aufweist, wobei ein erster Satz von jeweils zur Aufnahme eines isolierten Leiters und zur Herstellung einer Kontaktverbindung mit dessen Kern ausgebildeten Anschlußelementen vorgesehen ist, von denen jedes mit den Elementen des ersten Satzes verbunden ist und die sich von dem ersten Satz zur Kammer erstrecken, um somit Kontakte für die elektrische Verbindung zu den vom Stecker getragenen Kontakten zu definieren.

Gemäß einem weiteren Aspekt der vorliegenden Erfindung ist eine Frontplatte oder dein Adapterelement zur Verwendung mit dem oben definierten Steckverbinder vorgesehen, wobei diese Frontplatte oder dieses Adapterelement auf der Innenfläche mit einer Vielzahl von vorstehenden Elementen ausgebildet ist, die so angeordnet und positioniert sind, daß sie das Gehäuse des Steckverbinders erfassen können, so daß der Steckverbinder an der Frontplatte oder am Adapterelement über eine Klemmverbindung montiert werden kann.

Die Erfindung wird nachfolgend beispielhaft unter Bezug auf die beigefügten Zeichnungen beschrieben. Es zeigen:
- Fig. 1: eine Explosionsdarstellung eines Steckverbinders gemäß einer Ausführungsform der vorliegenden Erfindung.
- Fig. 2: eine perspektivische Ansicht, die darstellt, wie der Steckverbinder der vorliegenden Erfindung an einer Frontplatte angebracht werden kann.
- Fig. 3: eine Draufsicht des ersten Gehäuseteils des Steckverbinders.
- Fig. 4: eine Endansicht des Gehäuseteils.
- fig. 5: eine Ansicht des Gehäuseteils von unten.
- Fig. 6: einen Schnitt entlang der Linie 6-6 von Fig. 3.
- Fig. 7: eine Draufsicht eines in der Vorrichtung nach Fig. 1 verwendeten Satzes von Kontakten.
- Fig. 8: eine Draufsicht des zweiten Gehäuseteils.
- Fig. 9: eine Seitenansicht des zweiten Gehäuseteils.
- Fig. 10: einen Schnitt entlang der Linie 10-10 von Fig. 8.
- Fig. 11: eine Draufsicht eines fertigen Steckverbinders.
- Fig. 12: einen Schnitt entlang der Linie 12-12 von Fig. 11.
- Fig. 13: eine Draufsicht einer geänderten Form des fertigen Steckverbinders.
- Fig. 14: einen Schnitt entlang der Linie 14-14 von Fig. 13.
- Fig. 15: die elektrischen Verbindungen, die von den Vorrichtungen nach Fig. 13 und 14 geliefert werden können.
- Fig. 16: die Montage eines Steckverbinders bei Verwendung an einer Schalttafel.
- Fig. 17: eine perspektivische Ansicht von unten eines Einsatzelementes zur Verwendung bei einem vorliegenden Steckverbinder
- Fig. 18: das am Steckverbinder angebrachte Einsatzelement nach Fig. 17, und
- Fig. 19: einen Schnitt entlang der Linie 19-19 von Fig. 18.

Wie aus den Zeichnungen zu ersehen ist, weist das Steckverbindergehäuse ein spritzgegossenes Oberteil 10 und ein spritzgegossenes Unterteil 11 auf. Das Oberteil (1) hat entgegengesetzte, im wesentlichen rechteckige Seitenwände (14) und (15), jeweils mit einer Durchgangsöffnung (16) versehen. Von einer Position nahe zu jeder Seitenwand erstrecken sich zwei Reihen von säulenartigen Gebilden (18) nach oben. Die Klemmelemente 18, zwischen denen Schlitze 20 ausgebildet sind, die - wie weiter unten beschrieben wird - elektrisch leitende Verbindungselemente 80 aufnehmen. Eine Endwand 22 des Oberteils 10 ist mit einer Reihe paralleler Nuten 24 ausgebildet. Die Nuten 24 stehen mit ähnlichen Nuten 26 in Verbindung, die in der unteren Wand des Oberteils 10 ausgebildet sind. Jede der Nuten 26 erstreckt sich zu einer Position nahe dem unteren Teil eines von den Klemmelementen 18 definierten Klemmschlitz 20. Die Endwand 22 weist weiterhin entgegengesetzte, eingeformte Teile 28, 29 auf, die jeweils einen Kanal 30 definieren. Am entgegengesetzten Ende ist das Oberteil 10 mit integrierten Hakenelementen 34, 35 versehen, die Klemmelemente für elektrische Leiter bilden.

Das Unterteil 11 ist mit einem im wesentlichen flachen Endabschnitt 40 mit entgegengesetzten Seitenwänden 42 versehen, deren Außenfläche mit keilförmigen Vorsprüngen 43 ausgebildet ist. Auf der Innenseite jeder Seitenwand 42 sind nach innen gerichtete Flanschabschnitte 44 vorgesehen. Der entgegengesetzte Endabschnitt 45 des Unterteils 11 weist einen angeformten Teil auf, der einen Hohlraum 50 zur Aufnahme eines Steckers definiert, wie z.B. eines am Ende einer von einem Telefongerät oder einem Rechner-Endgerät kommenden Leitung angebrachten Steckers. Der Hohlraum 50 wird von einer Endwand 51 abgeschlossen, von der sich ein Paar von Stiften 52 erstreckt. Nahe dem ersten Endabschnitt 40 sind entgegengesetzt angeordnete aufrechte Säulen 56 angeformt. Die Endwand 51 des Unterteils 11 ist zwischen den Säulen 56 mit parallelen Schlitzen 57 versehen. Kleine aufrechte Vorsprünge 59 sind an der Fläche des ersten Endabschnitts 40 angeformt. Der Abstand und die seitlichen Abmessungen der Schlitze 57 und der Vorsprünge 59 sind ähnlich zu denen der Nuten 24. Das Unterteil 11 hat eine ebene Wand 58, die sich aufrecht in einer Höhe von etwa entsprechend der der Säulen 56 erstreckt. Das andere Ende der Wand 58 endet an einem vorstehenden Teil 60 von jeder der Seitenwände 42. Das Unterteil 11 kann einen Verschluß 70 aufnehmen, der zwischen den entgegengesetzten Seitenwänden 42 angeordnet und von den Flanschen 44 in Position gehalten wird. Der Verschluß 70 kann zwischen einer Position, in der er den Zugang zum Hohlraum 50 verschließt, und einer Position, in der der Hohlraum 50 offen ist, verschoben werden. Eine Feder 72 ist am Verschluß 70 angebracht, um diesen zur geschlossenen Position hin vorzuspannen.

Ein Satz von acht elektrischen Verbindungselementen 80 erstreckt sich in die Klemmelemente 18 gebildeten Schlitze 20 am Oberteil 10. Jedes dieser Elemente 80 ist mit einem Schneid-/Klemm-Kontaktelement 81 versehen, welches gabelförmig ausgebildet ist und einen relativ engen Kontaktschlitz 82 definiert, der in einem breiten Einführabschnitt 83 mündet. Die Anordnung ist so ausgeführt, daß bei Einlegen eines elektrisch isolierten Leiters in den Einführabschnitt 83 und bei Hineindrücken desselben in den engen Konzaktschlitz 82 die Isolierung des Leiters automatisch eingeschnitten wird, so daß ein Kontakt zwischen dem zentralen Kern des Leiters und dem Material des Verbindungselements 80 hergestellt wird. Man kann erkennen, daß die Schneid-/Klemm-Kontaktelemente 81 im wesentlichen eben sind und unter einem Winkel von im wesentlichen 45° zu einer Linie durch die Klemmelemente (18) angeordnet sind, d.h. 45° zur Ebene jedes Klemmschlitzes 20. Dieser Art von Anordnung wird z.B. im GB-Patent 2013423 beschrieben. Jedes Verbindungselement 80 ist weiterhin mit einem Fußabschnitt 85 versehen, der einstückig mit den Schneid-/Klemm-Kontaktelementen 81 ausgebildet ist.

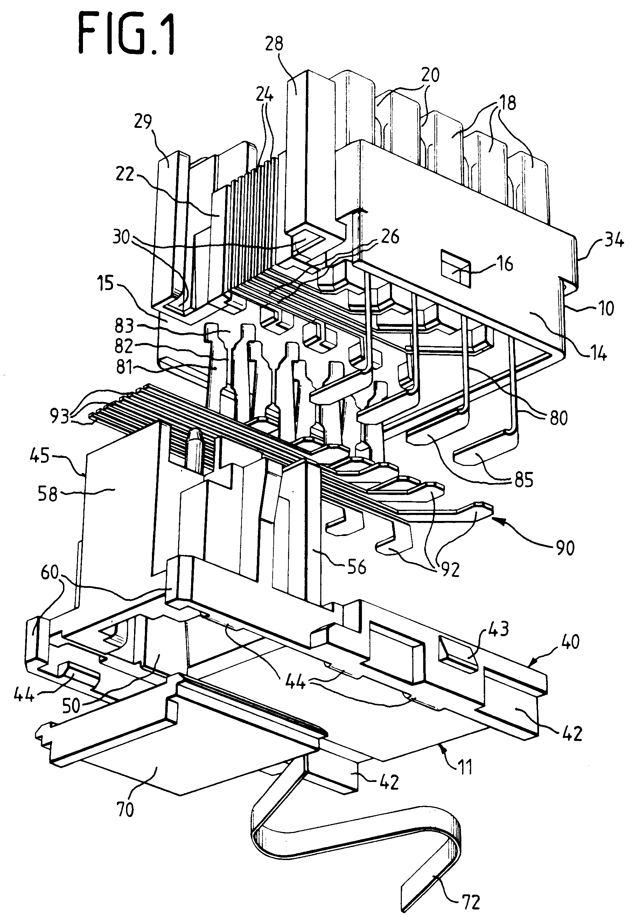

Ein zweiter Satz von Verbindungselementen 90 ist in der Explosionsdarstellung von Fig. 1 gezeigt. Dieser Satz weist eine Reihe von acht Kontaktzungen 92 auf, die jeweils an einen Fußabschnittt 85 aufweisen. Ein länglicher Kontaktstreifen 93 erstreckt sich von jeder Kontaktzunge 92. Bei Montage des Steckverbinders werden zunächst die Enden der leitenden Kontaktstreifen 93 in den Nuten 26 positioniert und leicht um die Kante zwischen der unteren Wand des Oberteils 10 und der Endwand 22 gebogen. Wenn die beiden Teile 10 und 11 zusammengebracht werden, werden die freien Enden der leitenden Streifen 93 zu den Schlitzen 57 der Endwand 51 geführt und darin positioniert. Die freien Enden der leitenden Kontaktstreifen 93 werden in die Nuten 24 des Oberteils 10 gezwungen, wenn ein Stecker in den Hohlraum 50 eingesteckt wird. Die freien Enden der länglichen leitenden Kontaktstreifen 93 werden somit im Hohlraum 50 des fertigen Aufbaus positioniert, und ein Kontakt wird mittels dieser länglichen leitenden Kontaktstreifen 93 mit den Verbindungselementen 80 hergestellt, welche sich aufrecht in die Klemmelemente 18 des Oberteils 10 erstrecken. Im fertigen Aufbau wird das Unterteil 11 mittels einer Schnappverbindung zwischen den keilförmigen Vorsprüngen 43 und den Öffnungen 16 des Oberteils 10 in Kontakt mit dem Oberteil 10 gehalten.

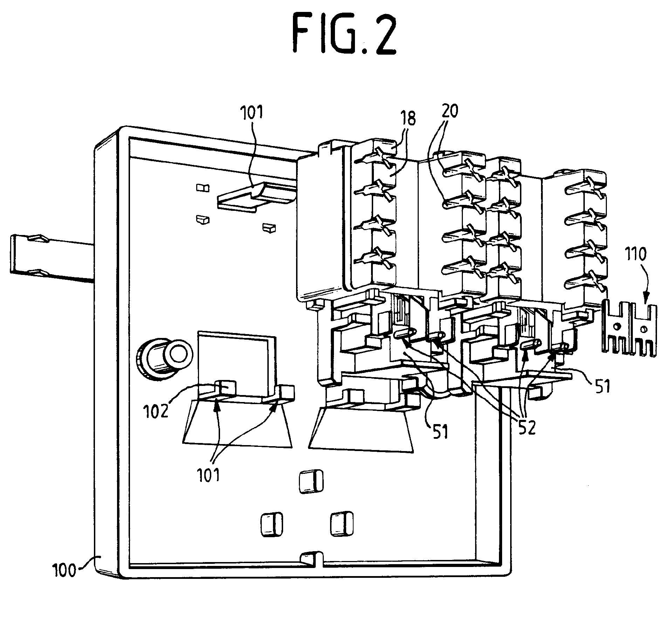

Wie man aus Fig. 2 ersehen kann, kann der fertige Aufbau im Innern einer auf einer Wand montierbaren Frontplatte 100 von üblicher Größe angebracht werden. Die Innenfläche der Frontplatte ist mit angeformten vorstehenden Elementen 101 versehen. Jedes Element 101 ist mit einer Lippe 102 ausgebildet, die einen äußeren Abschnitt der Teile 10, 11 erfassen kann. Der Aufbau der vorliegenden Vorrichtung erlaubt, daß sie in einfacher Weise mittels der an der inneren Fläche der Frontplatte 100 angeformten vorstehenden Elemente 101 festgeklemmt werden kann. Der Anschluß einer Telefonverdrahtung oder dergleichen kann in einfacher Weise durch Eindrücken der Leiter in die Kontaktschlitze 82 der Kontaktelemente 81 erfolgen.

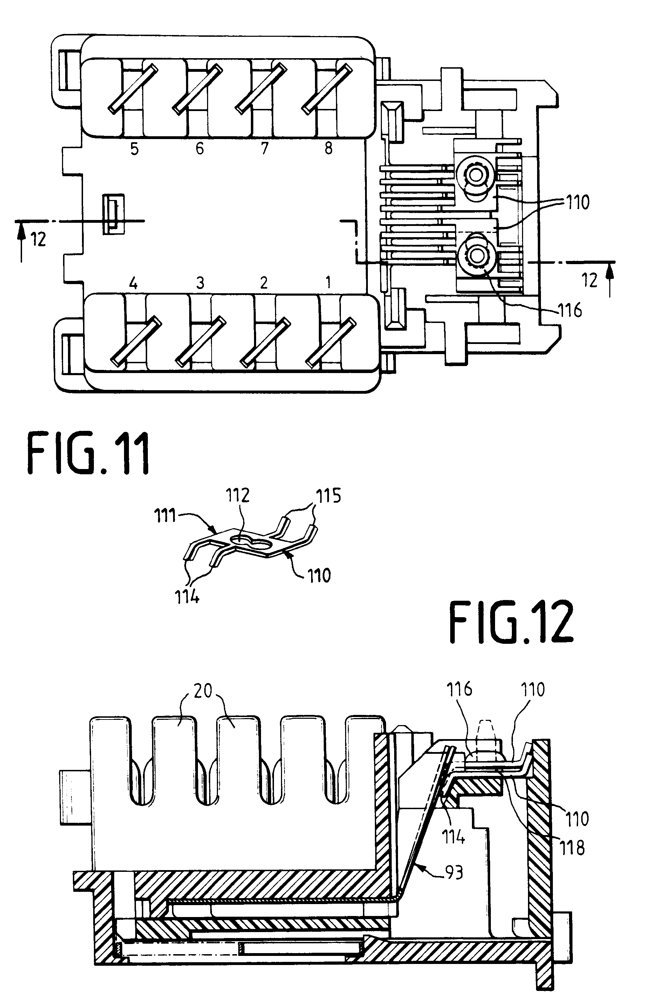

Ein Merkmal der vorliegenden Vorrichtung ist, daß sie einen integrierten Aufbau zur Aufnahme eines mit einem Telefongerät oder dergleichen verbundenen Steckers sowie auch eine Anschlußmöglichkeit von Telekommunikationsverdrahtungen liefert. Sie kann auf einer Frontplatte montiert werden, wie in der Fig. 2 gezeigt, und kann auch mittels geeigneter Adapter an anderen Aufbauplatten angebracht werden. Die Verbindung mit dem Adapter kann ähnlich sein wie die für eine Frontplatte nach Fig. 2 beschriebene; ein Beispiel ist in der Fig. 16 gezeigt. Geeignet geformte Elemente 110, wie z.B. die in Fig. 11 und 12 gezeigten, können an den Stiften 52 angebracht werden, um bestimmte der leitenden Kontaktstreifen 93 der Verbindungselemente 80, 90 kurzuschließen, wenn der Stecker nicht im Hohlraum 50 aufgenommen ist.

Wie in Fig. 11 und 12 gezeigt, weist jedes Element 110 einen Körper 111 mit einer Öffnung 112 sowie zwei Sätze von vorstehenden Fingern 114, 115 auf. Die Öffnungen 112 sind so geformt, daß der Körper 111 oberhalb der Stifte 52 in einer von zwei Positionen angeordnet und durch einen wärmeverschweißten Zapfen 116 gesichert werden kann. Wie in Fig. 11 und 12 gezeigt, sind zwei Elemente 110 an jedem Stift 52 mit einem Isolierstreifen 118 dazwischen angeordnet. Wenn sich kein Stecker im Hohlraum 50 befindet, kontaktieren die Finger 114 des Elements 110 bestimmte Kontaktstreifen 93 und stellen einen Kurzschluß zwischen diesen her. Dies kann für Prüfzwecke hilfreich sein, wenn ein Stecker in den Hohlraum 50 eingesteckt wird. Die Kurzschlüsse werden dann beseitigt, da die Kontaktstreifen 93 von den Fingern 114 wegbewegt werden.

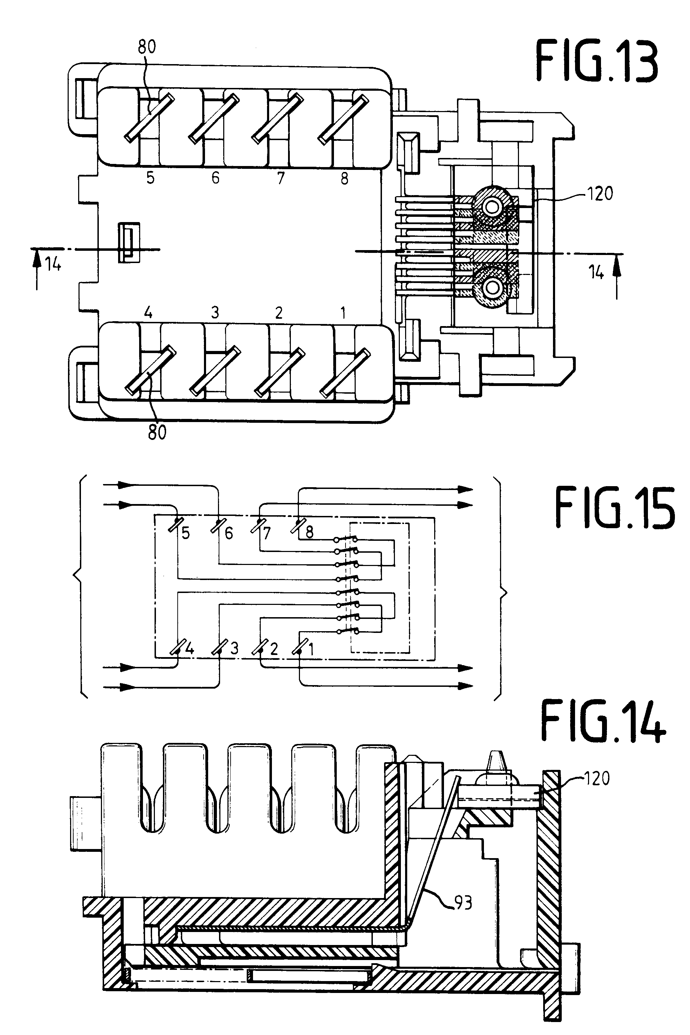

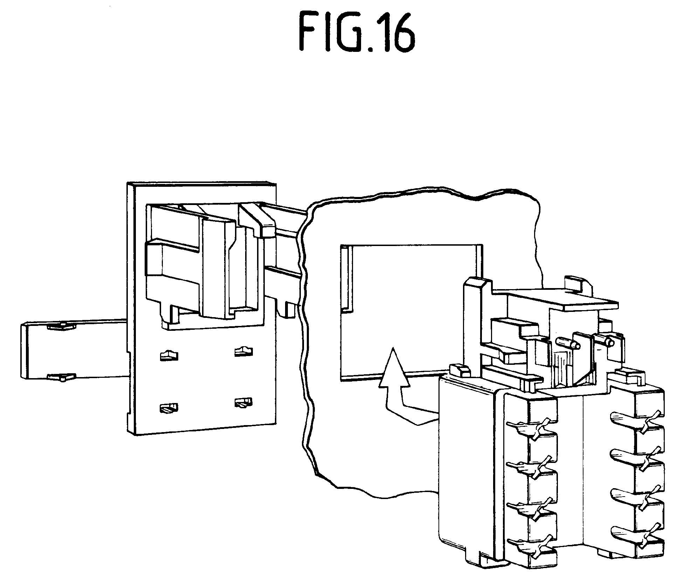

In Fig. 13 und 14 ist eine alternative Anordnung gezeigt, wobei eine Leiterplatte 120 an den Stiften 52 angebracht ist. Die Leiterplatte 120 kann einen Kurzschluß zwischen bestimmten Kontakten herstellen oder sie kann dazu benutzt werden, bestimmte Widerstände zwischen die Verbindungselemente 80, 90 zu schalten. Eine besondere Verbindungskonfiguration ist in der Fig. 15 gezeigt.

Ein weiteres Merkmal der Vorrichtung ist, daß sie in umgekehrter Weise zu der üblicherweise benutzten Montageart eingesetzt werden kann. Das heißt, daß die leitenden Kontaktstreifen 93 innerhalb des Hohlraums 50 oben angeordnet sind, wobei dies gegen das Ansammeln von Staub oder ähnlichen Objekten auf den Kontaktstreifen 93 und möglicherweise gegen das Kurzschließen eines oder mehrerer Verbindungslemente 80, 90 hilft. Es unterstützt weiterhin dagegen, daß der Verschluß 70 den Rückhaltebügel des Steckers überwindet, wenn dieser in Position gebracht ist.

Der Satz von Verbindungselementen 90 kann in einer konventionellen Stanztechnik hergestellt sein, wobei eine Reihe von Sätzen, wie in Fig. 7 gezeigt, gebildet wird. Um die Vorrichtung, wie z.B. in Fig. 1 gezeigt, zu montieren, werden das Ober- und das Unterteil 10, 11 so positioniert, wie im wesentlichen in dieser Figur gezeigt. Die Schneid/Klemm-Kontaktelemente 81 werden in geeigneter Position angebracht, so daß sie sich nach oben in das Oberteil 10 erstrecken. Der Satz von Verbindungselementen 90 wird dann so positioniert, daß seine Kontaktzungen 92 gegen den Fußabschnitt 85 der Schneid/Klemm-Kontaktelemente 81 anliegen. Diese Schneid/Klemm-Kontaktelemente 81 werden dann zusammengeschweißt. Das Unterteil 11 wird sodann nach oben zum Oberteil 10 hin geführt. Die Säulen 56 bewegen sich in die Kanäle 30 am Oberteil 10, und während dieser Bewegung veranlaßt der Endabschnitt 45 des Unterteils 11 die länglichen leitenden Kontaktstreifen 93, um die Verbindung der Unterfläche und der Endfläche des Oberteils 10 derart zu biegen, daß sie in die Schlitze 57 gezwungen werden. Somit kann man erkennen, daß dies eine besonders einfache Technik zur Montage eines Steckverbinders des vorliegenden Typs ist.

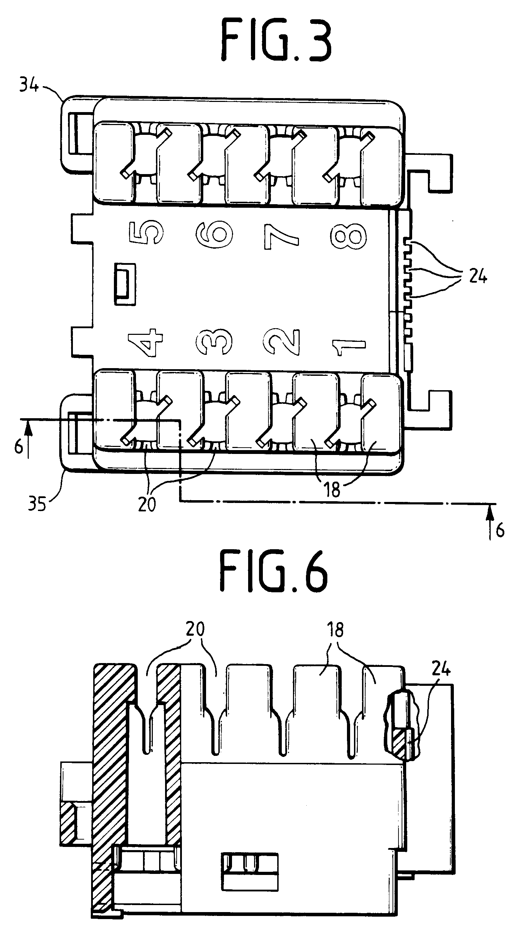

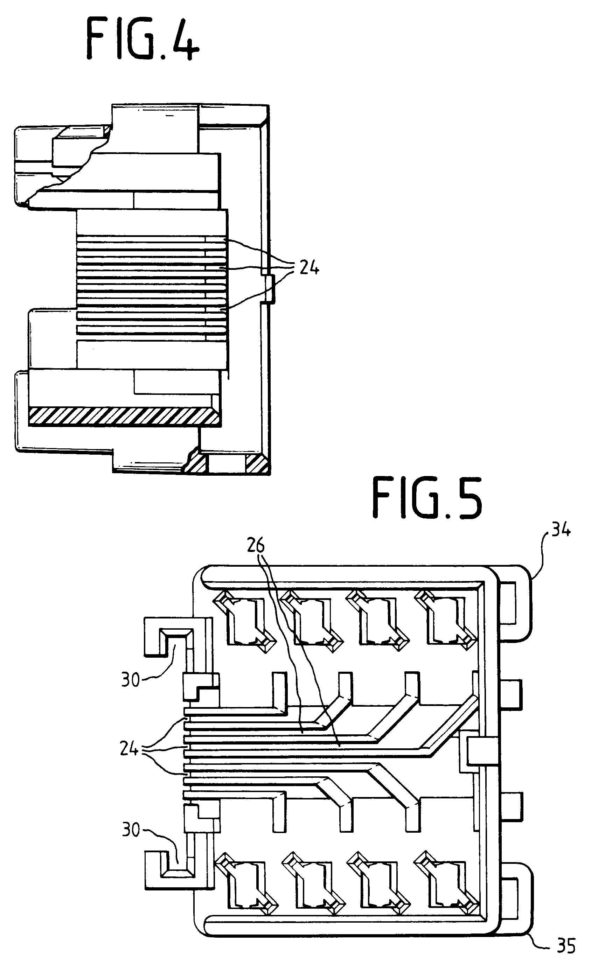

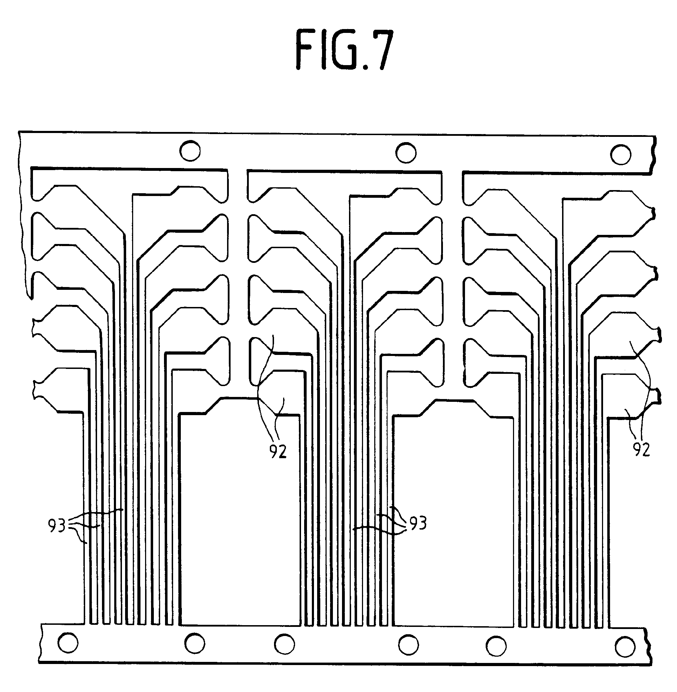

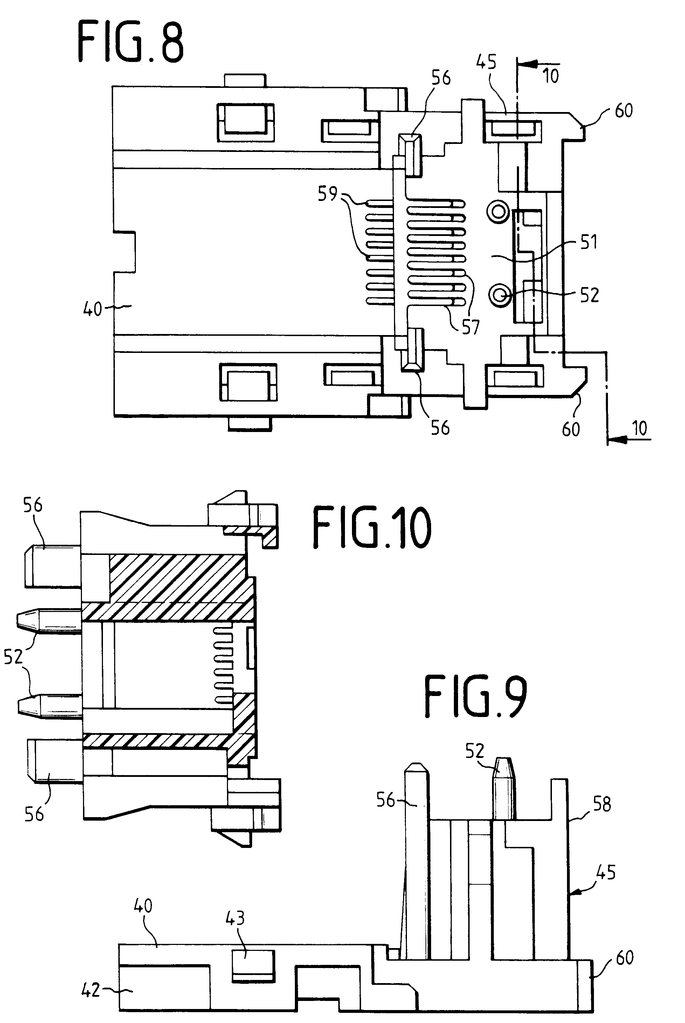

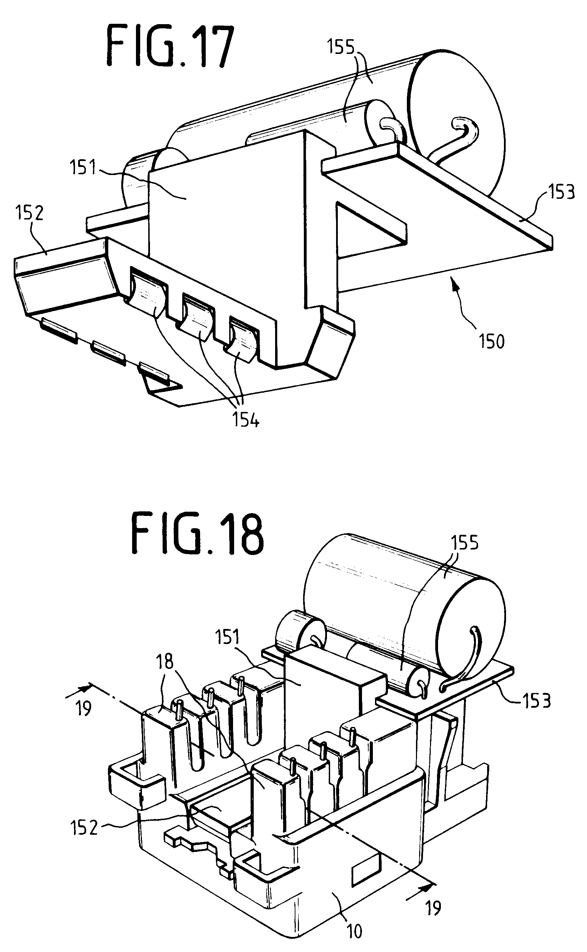

Eine Verbesserung der oben beschriebenen Anordnung ist in Fig. 17 bis 19 dargestellt. Diese Verbesserung besteht in Form eines Einsatzelementes 150, das durch eine Steckverbindung mit der unter Bezug auf Fig. 1 bis 16 beschriebenen Verbindungsanordnung verbunden werden kann. Die Einsatzanordnung erlaubt, daß elektrische Bauelemente, wie z.B. Kondensatoren, Dioden, Widerstände etc.., mit den Verbindungselementen des Steckverbinders verbunden werden. Das Einsatzelement weist einen spritzgegossenen Körper mit einer aufstehenden Wand 151 auf, von dessen Unterteil ein Schenkel 152 und von dessen Oberteil eine Plattform 153 vorsteht. Der Schenkel 152 hat auf seinen Seitenwänden elektrisch leitende Kontakte 154. Diese Kontakte sind mit Leitern (nicht dargestellt) verbunden, die sich durch den spritzgegossenen Körper zur Plattform 153 erstrecken. Die Plattform 153 kann elektrische Bauelemente, wie z.B. Kondensatoren, Dioden, Widerstände, etc., tragen, die auf der Plattform angebracht sind und mit den erwähnten Leitern verbunden sind.

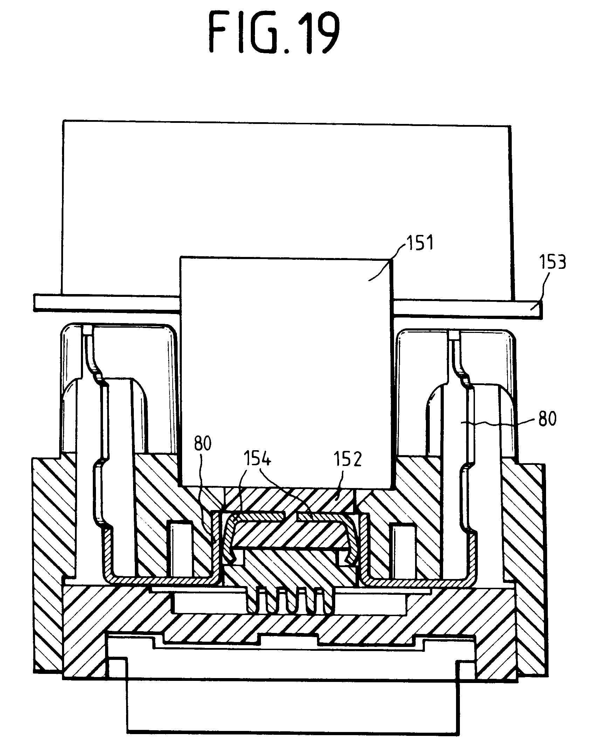

Wie in Fig. 18 und 19 gezeigt, ist die Einsatzanordnung so ausgebildet, daß sie in das Steckverbindergehäuse derart eingesteckt werden kann, daß der Schenkel 152 zwischen den in Abstand angeordneten Reihen von Klemmelementen 18 liegt und die Plattform über dem Gehäuseteil liegt, das mit den Stiften 52 versehen ist. Es ist deutlich, daß zur Aufnahme des Einsatzes das Oberteil 10 mit weggeschnittenen Teilen gebildet ist, die es erlauben, daß die elektrisch leitenden Kontakte 154 eine elektrische Verbindung mit den Kontaktelementen 80 herstellen, welche sich in das Oberteil 14 erstrecken. Auf diese Weise werden die auf der Plattform 153 angebrachten Bauelemente elektrisch mit den Kontakten der Verbindungsanordnung verbunden. Die Verbindung zwischen den Kontakten 154 und den Verbindungselementen des Steckverbinders ist in der Fig. 19 dargestellt.

Es wird deutlich, daß eine Reihe von Einsteck-Einsatzelementen zur Erfüllung unterschiedlicher Anforderungen vorgesehen werden kann. Der Einsatz kann entweder bei der Montage der Verbindungsanordnung oder auch vor Ort an einer bestehenden Verbindungsanordnung angebracht werden.

## Patentansprüche

1. Steckverbinder zum Verbinden eines Steckers mit elektrischen isolierten Leitern, mit einem Gehäuse welches zur Aufnahme des Steckers einen Hohlraum (50) aufweist, wobei ein erster und zweiter Satz von Verbindungselementen (80,90) vorgesehen sind,
**dadurch gekennzeichnet**,
daß jedes Verbindungselement (80) des ersten Satzes einen Schneidklemm-Kontakt (81) zur Aufnahme eines isolierten Leiters und zur Herstellung einer Kontaktverbindung mit dessen Kern und einen Fußabschnitt (85) aufweist, und daß jedes Verbindungselement (90) des zweiten Satzes einen Kontaktstreifen (93) und eine Kontaktzunge (92) aufweist, wobei jedes der Verbindungselemente (90) des zweiten Satzes über die Kontaktzungen (92) mit den Fußabschnitten (85) der Verbindungselemente (80) des ersten Satzes elektrisch verbunden ist und sich von dem ersten Satz zum Hohlraum (50) erstrecken, um somit eine elektrische Verbindung zu den vom Stecker getragenen Kontakten herzustellen, wobei der erste und zweite Satz von Verbindungselementen (80,90) im Gehäuse des Steckverbinders durch Führungsmittel (18, 24) in ihrer Lage fixiert sind.

2. Steckverbinder nach Anspruch 1, dadurch gekennzeichnet, daß die Führungsmittel aus parallelen Nuten (24,26), in denen die Kontaktstreifen (93) des ersten Satzes eingelegt sind, und aus Klemmelementen (18), zwischen denen die Schneidklemm-Kontakte (81) gehalten werden, gebildet sind.

3. Steckverbinder nach Anspruch 1, dadurch gekennzeichnet, daß das Gehäuse aus zwei zusammengefügten Teilen besteht, wobei die Verbindungslemente (90) des zweiten Satzes während der Montage des Gehäuses in das Ober- und das Unterteil (10,11) gebogen werden.

4. Steckverbinder nach einem der vorhergehenden Ansprüche, dadurch gekennzeichnet, daß jedes Verbindungselement (80) des ersten Satzes aus im wesentlichen ebenem Material besteht und einen zentralen Schlitz, der einen Kontaktschlitz (82) zur Aufnahme des leitenden Kerns eines isolierten Leiters darstellt, sowie eine Öffnung aufweist, die breiter ist als der Kontaktschlitz (82), wobei der Kontaktschlitz Wände mit scharfen Kanten und eine kleinere Breite als der Kerndurchmesser aufweist, so daß beim Hineindrücken eines Leiters in den Kontaktschlitz (82) dessen Isoliermaterial eingeschnitten und ein Kontakt zwischen dem Kern und dem Verbindungselement hergestellt wird.

5. Steckverbinder nach Anspruch 4, dadurch gekennzeichnet, daß im Oberteil (10) des Steckverbinders eine Vielzahl von jeweils einem Verbindungselement (80) des ersten Satzes zugeordneten Klemmelementen (18) vorgesehen ist, wobei jedes Klemmelement (18) einen Klemmschlitz (20) zur Aufnahme eines isolierten Leiters aufweist, so daß der Leiter im Klemmschlitz (20) verklemmt wird, und daß jedes Verbindungselement (80) des ersten Satzes im Klemmschlitz (20) des zugeordneten Klemmelements (18) angebracht ist, so daß die Ebene der Schneidklemm-Kontakte (81) sich unter einem Winkel von im wesentlichen 45° zu der des Klemmschlitzes (20) erstreckt.

6. Steckverbinder nach einem der vorhergehenden Ansprüche, dadurch gekennzeichnet, daß die Verbindungselemente (80) des ersten Satzes mit den Verbindungselementen (90) des zweiten Satzes verschweißt werden.

7. Steckverbinder nach einem der vorhergehenden Ansprüche, dadurch gekennzeichnet, daß der Hohlraum (50) mit einem Verschluß (70) zum Verschließen des Hohlraums (50) bei Abwesenheit eines Steckers versehen ist.

8. Steckverbinder nach einem der vorhergehenden Ansprüche, dadurch gekennzeichnet, daß am Gehäuse Klemmelemente zum Anklemmen einer Leitung vorgesehen sind, welche die isolierten Leiter enthält.

9. Steckverbinder nach einem der vorhergehenden Ansprüche, dadurch gekennzeichnet, daß Mittel (110) zum Herstellen einer Kurzschlußverbindung oder einer Verbindung mit einer bestimmten Impedanz zwischen bestimmten Verbindungselementen (90) des zweiten Satzes vorgesehen sind.

10. Steckverbinder nach einem der Ansprüche 3 bis 9, dadurch gekennzeichnet, daß die Ober- und Unterteile (10,11) mittels einer Schnappverbindung miteinander verbunden sind.

11. Steckverbinder nach einem der Ansprüche 2 bis 10, dadurch gekennzeichnet, daß die Verbindungselemente (90) des zweiten Satzes sich entlang länglichen Kanälen in einem der Gehäuseteile (10,11) erstrecken.

12. Steckverbinder nach einem der vorhergehenden Ansprüche, dadurch gekennzeichnet, daß das Gehäuse des Steckverbinders mit Mitteln versehen ist, die dessen Montage an einer wandmontierbaren Frontplatte erlauben.

13. Steckverbinder nach einem der vorhergehenden Ansprüche, dadurch gekennzeichnet, daß ein Einsatzelement (150) mit elektrischen Kontakten (154) vorgesehen ist, die beim Anbringen am Steckverbindergehäuse einen elektrischen Kontakt mit den elektrischen Kontakten des Steckverbinders herstellen.

14. Steckverbinder nach Anspruch 13, dadurch gekennzeichnet, daß das Einsatzelement (150) an genanntem Gehäuse mittels einer Steckverbindung angebracht wird.

15. Steckverbinder nach Anspruch 13 oder 14, dadurch gekennzeichnet, daß der genannte Einsatz (150) elektrische Bauelemente (155) trägt, wie z.B. Kondensatoren, Dioden oder Widerstände, die mit den Verbindungselementen (80,90) des Steckverbinders mittels der genannten elektrischen Kontakte (154) verbunden werden können.

16. Steckverbinder nach Anspruch 1, dadurch gekennzeichnet, daß der Steckverbinder auf einer Frontplatte (100) befestigt ist, auf deren Innenfläche eine Vielzahl von vorstehenden Elementen (101) ausgebildet sind, die so angeordnet sind, daß sie das Gehäuse des Steckverbinders erfassen können, so daß der Steckverbinder an der Frontplatte (100) oder am Adapterelement über eine Klemmverbindung montiert werden kann.

17. Steckverbinder nach Anspruch 16, dadurch gekennzeichnet, daß die vorstehenden Elemente (101) einstückig mit dem Material der Frontplatte (100) spritzgegossen sind.

## Claims

1. A connector for connecting a plug to electrically insulated wires, said connector comprising a moulded housing having a cavity for receiving said plug, a first set of connecting elements and a second set of connecting elements being provided, characterised by that each connecting element (80) of the first set has an insulation displacement contact (81) for receiving an insulated wire and for making contact connection with the core thereof, and a foot portion (85), and that each connecting element (90) of the second set has a contact strip (93) and a contact tongue (92), each of the connecting elements (90) of the second set being electrically connected by means of the contact tongues (92) with the foot portions (85) of the connecting elements (80) of the first set and extending from the first set to the cavity (50) so to make an electrical connection to the contacts carried by the plug, the first and second sets of connecting elements (80, 90) being secured in their positions in the housing of the connector by guiding means (18, 24).

2. A connector according to claim 1, characterised by that the guiding means are formed of parallel grooves (24, 26) in which are placed the contact strips (93) of the first set, and of clamping elements (18) between which are retained the insulation displacement contacts (81).

3. A connector according to claim 1, characterised by that the housing is formed of two parts brought together, during assembly the connecting elements (90) of the second set being bent into the upper and lower parts (10, 11).

4. A connector according to one of the preceding claims, characterised by that each connecting element (80) of the first set is made of a generally planar material and has a central slot representing a contact slot (82) for receiving the conductive core of an insulated wire and an aperture being wider than the contact slot (82), the contact slot having walls with sharp edges and a smaller width than the core diameter, so that when a wire is urged into the contact slot (82) its insulating material will be cut and contact is made between the core and the connecting element.

5. A connector according to claim 4, characterised by that in the upper part (10) of the connector are provided a plurality of clamping elements (18) each assigned to a connecting element (80) of the first set, each clamping element (18) having a clamping slot (20) for receiving an insulated wire, so that the wire is clamped in the clamping slot (20), and that each connecting element (80) of the first set is disposed in the clamping slot (20) of the assigned clamping element (18), so that the plane of the insulation displacement contacts (81) extends at an angle of substantially 45° to that of the clamping slot (20).

6. A connector according to one of the preceding claims, characterised by that the connecting elements (80) of the first set are welded together with the connecting elements (90) of the second set.

7. A connector according to one of the preceding claims, characterised by that the cavity (50) is provided with a shutter (70) for closing the cavity (50) when a plug is not present.

8. A connector according to one of the preceding claims, characterised by that clamping elements for connecting a lead containing the insulated wires are provided at the housing.

9. A connector according to one of the preceding claims, characterised by that means (110) for making a short circuit or a connection having a preselected impedance between selected connecting elements (90) are provided.

10. A connector according to one of claims 2 to 9, characterised by that the upper and lower parts (10, 11) are connected to each other by a snap-fit connection.

11. A connector according to one of claims 2 to 10, characterised by that the connecting elements (90) of the second set extend along elongate channels in one of the housing parts (10, 11).

12. A connector according to one of the preceding claims, characterised by that the housing of the connector is provided with means to permit its mounting on a wall mountable face plate.

13. A connector according to one of the preceding claims, characterised by that an insertion element (150) with electrical contacts (154) is provided, said contacts making electrical contact to the electrical contacts of the connector when mounted at the connector housing.

14. A connector according to claim 13, characterised by that the insertion element (150) is mounted at said housing by means of a plug connection.

15. A connector according to claim 13 or 14, characterised by that said insertion element (150) carries electrical components (155) such as capacitors, diodes or resistors, which can be connected with the connecting elements (80, 90) by means of said electrical contacts (154).

16. A connector according to claim 1, characterised by that the connector is secured to a face plate (100) on the interior surface of which a plurality of projecting elements (101) are formed which are so arranged that they can engage the housing of the connector such that the connector can be secured to the face plate (100) by a clip type connection.

17. A connector according to claim 16, characterised by that the projecting elements (101) are moulded integrally with the material of the face plate (100).

## Revendications

1. Connecteur pour le raccordement d'une prise à des conducteurs électriquement isolés, comprenant un boîtier ayant une cavité (50) pour la réception de la prise, un premier et un deuxième jeu d'éléments de connexion (80, 90) étant prévus,
caractérisé en ce que chaque élément de connexion (80) du premier jeu est pourvu d'un contact à déplacement d'isolation (81) pour la réception d'un conducteur isolé et pour l'établissement d'une connexion de contact avec l'âme de celui-ci et d'une section d'embase (85), et que chaque élément de connexion (90) du deuxième jeu est pourvu d'une bande de contact (93) et d'une lame de contact (92), chacun des éléments de connexion (90) du deuxième jeu étant électriquement raccordé par l'intermédiaire des lames de contact (92) aux sections d'embase (85) des éléments de connexion (80) du premier jeu et s'étendant du premier jeu jusqu'à la cavité (50) pour ainsi établir une connexion électrique aux contacts portés par la prise, le premier jeu et le deuxième jeu d'éléments de connexion (80,90) étant fixés en position dans le boîtier du connecteur par des moyens de guidage (18, 24).

2. Connecteur selon la revendication 1,
caractérisé en ce que les moyens de guidage sont formés de rainures parallèles (24, 26), dans lesquelles sont insérées les bandes de contact (93) du premier jeu, et d'éléments de serrage (18), entre lesquelles sont tenus les contacts à déplacement d'isolation (81).

3. Connecteur selon la revendication 1,
caractérisé en ce que le boîtier est formé de deux parties combinées, les éléments de connexion (90) du deuxième jeu étant pliés pendant le montage dans la partie supérieure (10) et la partie inférieure (11).

4. Connecteur selon une des revendications précédentes,
caractérisé en ce que chaque élément de connexion (80) du premier jeu consiste en une matière généralement plate et comporte une fente centrale qui forme une fente de contact (82) pour la réception de l'âme conductive d'un conducteur isolé, et une ouverture qui est plus large que la fente de contact (82) ayant des parois avec des arêtes vives et une largeur plus faible que le diamètre de l'âme, de sorte que lors de l'introduction d'un conducteur dans la fente de contact (82) la matière isolante de celui-ci soit coupée et un contact entre l'âme et l'élément de connexion soit établi.

5. Connecteur selon la revendication 4,
caractérisé en ce que dans la partie supérieure (10) du connecteur, une multiplicité d'éléments de serrage (18) chacun associé à un élément de connexion (80) du premier jeu est prévue, chaque élément de serrage (18) comprenant une fente de serrage (20) pour la réception d'un conducteur isolé, de sorte que le conducteur soit serré dans la fente de serrage (10), et que chaque élément de connexion (80) du premier jeu est positionné dans la fente de serrage (20) de l'élément de serrage (18) associé, de sorte que le plan des contacts à déplacement d'isolation (81) s'étende sous un angle d'essentiellement 45° par rapport au plan de la fente de serrage (20).

6. Connecteur selon une des revendications précédentes,
caractérisé en ce que les éléments de connexion (80) du premier jeu sont soudés aux éléments de connexion (90) du deuxième jeu.

7. Connecteur selon une des revendications précédentes,
caractérisé en ce que la cavité (50) est pourvue d'une fermeture (70) pour fermer la cavité (50) lors de l'absence d'une prise.

8. Connecteur selon une des revendications précédentes,
caractérisé en ce que des éléments de serrage sont prévus au boîtier pour serrer un câble comprenant les conducteurs isolés.

9. Connecteur selon une des revendications précédentes,
caractérisé en ce que des moyens (110) pour l'établissement d'une connexion de court-circuit ou d'une connexion d'une certaine impédance entre certains éléments de connexion (90) du deuxième jeu sont prévus.

10. Connecteur selon une des revendications 3 à 9,
caractérisé en ce que la partie supérieure (10) et la partie inférieure (11) sont liées par une connexion à enclenchement.

11. Connecteur selon une des revendications 2 à 10,
caractérisé en ce que les éléments de connexion (90) du deuxième jeu s'étendent le long de canaux oblongues dans une des parties de boîtier (10, 11).

12. Connecteur selon une des revendications précédentes,
caractérisé en ce que le boîtier du connecteur est pourvu de moyens, qui permettent son montage sur une platine avant à monter sur une paroi.

13. Connecteur selon une des revendications précédentes,
caractérisé en ce qu'un élément d'insertion (150) ayant des contacts électriques (154) est prévu, lesdits contacts établissant un contact électrique avec les contacts électriques du connecteur lors de la fixation au boîtier du connecteur.

14. Connecteur selon la revendication 13,
caractérisé en ce que l'élément d'insertion (150) est fixé audit boîtier au moyen d'une connexion à fiche.

15. Connecteur selon la revendication 13 ou 14,
caractérisé en ce que ledit élément d'insertion (150) porte des composants électriques, comme p. ex. condensateurs, diodes ou résistances, qui peuvent être raccordés aux éléments de connexion (80, 90) du connecteur au moyen desdits contacts électriques (154).

16. Connecteur selon la revendication 1,
caractérisé en ce que le connecteur est fixé à une platine avant (100), sur la face intérieure de laquelle une multiplicité d'éléments (101) en saillie est formée, lesdits éléments étant disposés de telle manière, qu'ils puissent saisir le boîtier du connecteur, de sorte que le connecteur puit être monté à la platine avant (100) ou à l'élément adaptateur par l'intermédiaire d'une connexion de serrage.

17. Connecteur selon la revendication 16,
caractérisé en ce que les éléments (101) en saillie sont moulés en une pièce avec la matière de la platine avant (100).
